# EUROPÄISCHE PATENTSCHRIFT

(11) **EP 1 279 948 B1**
(45) Veröffentlichungstag und Bekanntmachung des Hinweises auf die Patenterteilung: **16.07.2008**
(21) Anmeldenummer: 02013754.3
(22) Anmeldetag: 21.06.2002
(51) Int. Cl.: G01N 21/64, G01N 21/76, G01N 35/02, B01L 3/00

(54) **Strahlungsmessgerät zur Messung der Lumineszenz mit einem beweglichen Dichtelement**
Optical radiation sensor system for measuring the luminescence having a movable sealing element
Système de détection de rayonnement optique pour la mesure de la luminescence comportant un élément d'étanchéité mobile

(30) Priorität: 28.07.2001 DE 10136866
(43) Veröffentlichungstag der Anmeldung: 29.01.2003
(73) Patentinhaber: Berthold Technologies GmbH & Co. KG, 75323 Bad Wildbad (DE)
(72) Erfinder: Berthold, Fritz, 75173 Pforzheim (DE); Hafner, Klaus, 04157 Leipzig (DE)
(74) Vertreter: Frank, Gerhard

(56) Entgegenhaltungen:
- EP-A- 0 523 522
- EP-A- 0 760 478
- DE-A- 19 704 731
- DE-A- 19 925 161
- US-A- 5 611 994
- PATENT ABSTRACTS OF JAPAN -& JP 07 083831 A (TOYOBO CO LTD), 31. März 1995 (1995-03-31)
- PATENT ABSTRACTS OF JAPAN -& JP 05 157699 A (HAMAMATSU PHOTONICS KK), 25. Juni 1993 (1993-06-25)

## Beschreibung

Technischer Hintergrund der Erfindung

Bei der Lumineszenz erfolgt eine energetische Anregung einer bspw. in einem Behälter befindlichen Substanz, die zumindest teilweise als Strahlung emittiert wird, so dass Verlauf und Intensität dieser Strahlungsemission durch eine Messung mittels eines Strahlungsdetektors erfasst werden können und hieraus insbesondere Rückschlüsse auf die Anwesenheit einer interessierenden Komponente in dem Behälter gezogen werden können.

Im Zuge der immer weiter entwickelten Standardisierung und Miniaturisierung der Laboranalytik, in deren Rahmen solche Messungen ausgeführt werden, werden die Behälter, in denen sich die lichtemittierende Substanz befindet, im folgenden als Probenbehälter bezeichnet, immer kleiner; typischerweise sind diese in Form matrixartig angeordneter Vertiefungen innerhalb eines Trägers ausgeführt, einer sogenannten Mikroplatte mit einer typischen Anzahl von 8 x 12 = 96 Probenbehältern, es sind jedoch auch bereits Mikrotiterplatten mit 16 x 24 = 384 oder 15 x 36 = 540 Probenbehältern im Einsatz.

Hierbei muss die von der Substanz emittierte Strahlung möglichst verlustfrei dem Strahlungsdetektor zugeführt werden, wozu Fremdeinflüsse durch Streustrahlungen aus der Messumgebung und/oder benachbarten Probenbehältern weitgehend eliminiert werden müssen.

Diese grundsätzlich schon immer bestehende Anforderung an eine Lumineszenzmessung (oder auch eine Fluoreszenzmessung) ist durch die genannte Miniaturisierung der Probenbehälter erheblich verschärft worden, da sich bei reduzierter Geometrie des Probenbehälters und damit einhergehender reduzierter Strahlungsemission Ungenauigkeiten überproportional auf die letztlich vom Strahlungsdetektor erfassbare Strahlungsmenge und damit die Präzision der Messung auswirken. Eine sorgfältige Dimensionierung und Abstimmung der konstruktiven Einheiten, die am Ablauf dieses Messvorgangs beteiligt sind, ist daher extrem kritisch für die Zuverlässigkeit und Verifizierbarkeit solcher Messungen.

Die vorliegende Erfindung beschäftigt sich vorrangig mit der Abdichtung zwischen Probenbehälter und dem Übertragungsweg zum Strahlungsdetektor.

### Stand der Technik

Eine Vorrichtung zur Lumineszenzmessung zeigt die DE 41 23 817 C2. Das wesentliche Merkmal dieser Lösung besteht in einer Blendenplatte zwischen der Eintrittsblende des Detektors und den in Form einer Mikrotiterplatte auf einer Aufnahmeplatte unter dem Detektor angeordneten Probenbehältern, die in ihrer Gesamtheit mit konstantem Druck an die Blendenplatte elastisch anpressbar und horizontal verschiebbar ist.

Diese Lösung erlaubt eine zufriedenstellende Abdichtung gegen Lichteinfall, nachteilig sind jedoch mechanische Beanspruchungen durch den Reibkontakt zwischen der Oberkante der Probenbehälter einerseits und der Kontaktfläche (Unterseite) der Blendenplatte andererseits, die zu erheblichem Abrieb bei längerem Gebrauch und dadurch Reduzierung der Abdichtfunktion führen kann. Dies ist letztlich, in der "Kollektivbehandlung" sämtlicher Probenbehälter zu sehen, da die Gesamtheit der Probenbehälter an der. Unterseite der Blendenplatte schleifend entlang geführt wird, obwohl ein derartiger Kontakt eigentlich nur für den jeweils der Messung unterworfenen Probenbehälter erforderlich wäre, in dem die aktuelle Lumineszenzreaktion abläuft.

Die DE 197 04 732 bedient sich bei einer vergleichbaren Messvorrichtung zur Abdichtung einer mit der Mikrotiterplatte in Eingriff bringbaren "Querabschirmung", die in einer "Eingriffsstellung" die Messöffnung eines in der Messposition befindlichen Probenbehälters seitlich hintergreift und von den Messöffnungen der benachbarten Probenbehälter trennt. Diese Lösung soll eine Weiterentwicklung der eingangs genannten Vorrichtung darstellen, bei der eine nicht ausreichende Abdichtung beklagt wird. Alternativ zur "Querabschirmung" soll dieses Problem mit einer "Abschirmplatte" gelöst werden, die mit der Probenplatte in Eingriff bringbar sein soll.

Dieser Vorschlag von Lichtfallen, die eine genau definierte räumliche Position zu den Probengefäßen einnehmen müssen, erfordert allerdings einen erheblichen konstruktiven Aufwand:

Zunächst muss außer der Vorrichtung zur Horizontalverschiebung der Probenbehälter eine Schwenkvorrichtung zur Erzeugung einer Vertikalbewegungskomponente der Mikrotiterplatte vorgesehen sein, darüber hinaus erfordert diese Lösung wegen der angesprochenen Miniaturisierung der in einer Mikrotiterplatte angeordneten Probenbehälter eine erhebliche mechanische Präzision der Verschiebe- und Zuführvorrichtungen für die Mikrotiterplatten, um die beabsichtigten "Lichtfallen" genau an denjenigen Stellen zu positionieren, in denen sie eine Verbesserung der Lichtabdichtung erreichen können.

Eine bei optimaler Funktion denkbare graduelle Verbesserung der Lichtabdichtung wird bei dieser Lösung folglich durch einen erheblichen apparativen Mehraufwand erkauft, der diese Vorrichtung aufwendig und damit auch störungsanfällig macht.

Die EP 0 760 478 A2 bedient sich einer Abdichtplatte, die vertikal über einer Mikroplatte verfahrbar ist. Die Abdichtplatte hat eine Durchgangsöffnung zum Durchtritt der Strahlung von dem ausgewählten Probenbehälter der Mikroplatte, um die Durchtrittsöffnung ist ein nach unten zeigender Kragen angeordnet. In der Messposition wird die Abdichtplatte nach unten verfahren, bis der Kragen auf der die Austrittsöffnung der Probenbehälter umgebenden Wandung aufsitzt und so eine Lichtabdichtung bewirkt. Zur Steuerung dieser Vertikalbewegung der Abdichtplatte ist ein Motor vorgesehen, der über eine Exzenterwelle die an mehreren vertikalen Führungen gehaltene Abdichtplatte gegen die Vorspannung von Federn nach unten drückt. Als weitere Abdichtmaßnahme ist die Mikroplatte in einer Aufnahmebox gehalten, auf deren Ränder die Abdichtplatte in der Messposition aufsitzt.

Es bedarf folglich zu jeder Messung einer Betätigung dieses aufwändigen Mechanismus'.

Anstelle einer Abdichtplatte sieht die JP-A-70 83831 einen Dichtmechanismus vor, der einen inneren, stationären Führungszylinder und ein diesen koaxial umgebendes zylindrisches Dichtelement beinhaltet. Dieses Dichtelement ist vertikal verfahrbar und derart an die Probenbehälter oder deren Umgebungsbereich anpassbar, dass es in der Messposition den unteren Abschnitt des Führungszylinders und den oberen Randbereich eines Probenbehälters manschettenartig umschließt und so einen lichtdichten Kanal zwischen der Austrittsöffnung des Probenbehälters und der Eintrittsöffnung des Detektors bildet. Auch hier sind Motor- und Übertragungseinrichtungen erforderlich, um jeden Dichtzyklus durchzuführen.

Die JP-A 05 157699 benutzt das gleiche Prinzip eines vertikal verschiebbaren zylindrischen Dichtelements. Die untere Stirnseite des Dichtelements ist derart ausgebildet, dass in der Messposition ein Formschluss mit dem Randbereich einer Austrittsöffnung der Mikroplatte erreicht wird, beispielsweise durch einen Kragen, der in den Probenbehälter ein Stück eintaucht. Die konstruktive Ausbildung der Randbereiche lässt erkennen, dass auch bei dieser Lösung motorische Mittel zur Anhebung und Absenkung des Dichtzylinders erforderlich sind.

Den letztgenannten Druckschriften ist somit gemeinsam, dass die Positionierung des Dichtelementes in der Messposition und das Hochfahren des Dichtelements nach der Messung in eine Bereitschaftsposition, in der die Mikroplatte verfahren werden kann, eine aufwändige und präzise Steuerung dieser Abläufe erfordert, um eine zufriedenstellende Dichtwirkung zu erzielen.

### Darstellung der Erfindung

Es ist Aufgabe der Erfindung, die Vorrichtung dahingehend zu verbessern, dass mit geringerem mechanischen Aufwand eine Verbesserung der Abdichtwirkung zwischen den Probenbehältern und der Eintrittsblende des Strahlungsdetektors erzielbar ist.

Erfindungsgemäß wird diese Aufgabe gemäß dem kennzeichnenden Teil des Patentanspruchs 1 gelöst.

Der Grundgedanke der Erfindung ist darin zu sehen, dass eine "Individualdichtung" in form eines selbst justierenden Dichtelementes erreicht wird, das zusätzlich die Funktion einer optischen Blende erfüllt und eine "Dichtverbindung" ausschließlich zwischen dem sich in seiner Messposition unterhalb der Eintrittsblende des Strahlungsdetektors befindlichen Probenbehälter und seiner Eintrittsblende herstellt, wobei die übrigen Probenbehälter nicht in Kontakt mit Bauteilen der Strahlungsmesseinrichtung wie z.B. Blendenplatten oder ähnlichem steht.

Im Gegensatz zu den in den letztgenannten Druckschriften erforderlichen Antriebs- und Steuerungseinrichtungen zur Vertikalbewegung des Dichtelements "fällt" das erfindungsgemäß ausgestaltete Dichtelement in seine Dichtposition über dem Rand des jeweils aktuell auszumessenden Probenbehälters, wodurch die vertikale Positionierung des Dichtelementes in seiner Führung sich automatisch an die vertikale Position des zugeordneten Probenbehälters anpasst bzw. auf diese einstellt. Damit haben Verkantungen oder Verdrehungen der Aufnahmeplatte für die Probenbehälter oder der Mikrotiterplatte selbst keine entscheidende Auswirkungen auf die Präzision der Lichtabdichtung mehr; bei der Positionierung der Aufnahmeplatte mit den Probenbehältern unterhalb der Eintrittsblende des Dichtelements muss lediglich eine vertikale "Grobpositionierung" vorgenommen werden, die mit wesentlich geringerem konstruktiven Aufwand realisierbar ist als beim Gegenstand der vorbekannten Druckschriften.

Im Gegensatz zum Stand der Technik mit seinen "aktiven" motorischen Dichtungsmaßnahmen stellt die erfindungsgemäße Lösung somit eine sehr viel einfachere und flexiblere "passive" Dichtungslösung bereit, bei der das Zusammenspiel der Mikroplatte mit dem kegelstumpfförmig ausgebildeten Abschnitt des Dichtelements die Abläufe steuert.

Die erfindungsgemäße Lösung ermöglicht eine Vielzahl von besonders vorteilhaften Weiterbildungen, wobei beispielshaft nur genannt sein soll, dass mehrere Dichtelemente verschiedener Ausbildung vorgesehen sein können, die wahlweise in der Führung anbringbar sind und die sich insbesondere im Querschnitt der Eingangsöffnung des Durchtrittskanals unterscheiden. Diese Dichtelemente können vorzugsweise auf einem verschieb- oder verdrehbaren Träger gehalten sein, der unterhalb der Führung befestigt ist, so dass eine extrem einfache Anpassung der Abdichtung an verschieden dimensionierte Mikrotiterplatten möglich ist, indem ganz einfach ein entsprechend dimensioniertes Dichtelement in den Strahlengang eingebracht wird, das eine Optimierung der Lichtausbeute bei dem jeweils eingesetzten Typus von Mikrotiterplatten erreicht.

Weitere vorteilhafte Ausgestaltungen sind weiteren Unteransprüchen zu entnehmen.

### Kurze Beschreibung der Zeichnungen

Das bevorzugte Ausführungsbeispiel der erfindungsgemäßen Vorrichtung wird nun anhand von Zeichnungen näher erläutert, es zeigen:
- Figur 1:: einen Vertikalschnitt durch die Vorrichtung in einer ersten Messposition in der Ebene A-A der Figur 2,
- Figur 2:: eine Aufsicht auf die Vorrichtung gemäß Figur 1,
- Figur 3:: einen Vertikalschnitt durch die Vorrichtung in einer zweiten Messposition, in der Ebene B-B der Figur 4,
- Figur 4:: eine Aufsicht auf die Vorrichtung gemäß Figur 3,
- Figur 5:: eine erste Explosionsdarstellung der Vorrichtung in der zweiten Messposition mit verschiedenen Probenbehältem, schräg von oben gesehen,
- Figur 6:: eine zweite Explosionsdarstellung gemäß Figur 5, schräg von unten gesehen,
- Figur 7:: einen Vertikalschnitt gemäß Figur 1 in der Leerposition,
- Figur 8:: einen Vertikalschnitt gemäß Figur 1 in der Sperrposition, in der Ebene C-C der Figur 9, und
- Figur 9:: eine Aufsicht auf die Vorrichtung gemäß Figur 8.

### Beschreibung des bevorzugten Ausführungsbeispiels

Über einer horizontal verschiebbaren Mikroplatte 10 ist ein Gehäuse 20 angeordnet, das einen Strahlungsdetektor 40 trägt. Hierzu weist das Gehäuse 20 eine Ringschulter auf, auf der der Rand des Strahlungsdetektors 40 aufsitzt, ferner ist eine Haltemanschette 21 zur weiteren Stabilisierung des Strahlungsdetektors vorgesehen, die in einer entsprechenden Zylinderbohrung des Gehäuses 20 sitzt.

Die Mikroplatte 10 weist in bekannter Art und Weise mehrere Vertiefungen auf, die Probenbehälter 12 bilden. Beim dargestellten Ausführungsbeispiel befindet sich der Probenbehälter 12 in einer Horizontalposition, die die Messung einer Lumineszenzoder Fluoreszenzstrahlung im Probenbehälter 12 gestattet. Der Strahlungsweg von der Austrittsöffnung 12A des Probenbehälters 12 bis zur Eintrittsblende 41 des Strahlungsdetektors 40 wird von einem Kanal 24 gebildet, der unterschiedliche Abschnitte mit unterschiedlichen Funktionen besitzt:

Sein unterer Abschnitt weist zwei Übergangsabschnitte 25A und 25B auf. Der Übergangsabschnitt 25A liegt koaxial mit der Längsachse des in horizontaler Messposition befindlichen Probenbehälters 12 und dient in seinem dem Probenbehälter 12 zugewandten Abschnitt als Führung für ein erstes Dichtelement 50A. In diesem Übergangsabschnitt 25A bzw. der aus diesem gebildeten Führung 26A für das Dichtelement 50A mündet auch das Ende einer Injektionseinrichtung 30, die zur Durchführung von Chemilumineszenzmessungen mit kurzer Verzögerung zwischen der Zugabe des initiierenden Reagens und dem Beginn der Strahlungsemission benötigt wird.

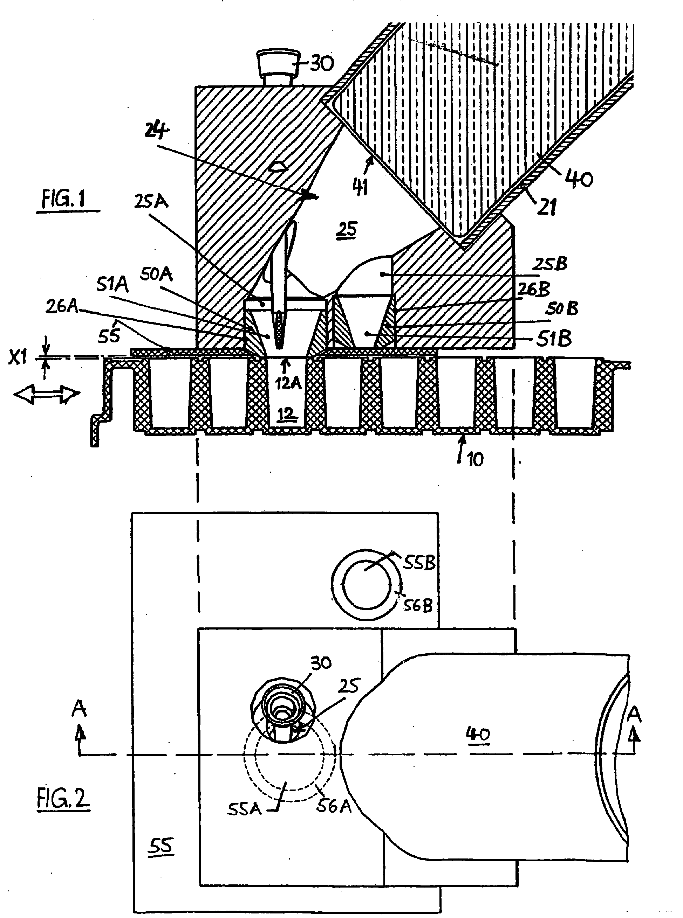

Unterhalb des Gehäuses 20 befindet sich ein Blendenelement in Form einer Blendenplatte 55 mit zwei Öffnungen 55A,55B für den unteren Abschnitt eines Dichtelementes 50A,50B. Die Führungen 26A,26B, die Dichtelemente 50A und 50B und Blendenplatte 55 sind hierbei so dimensioniert und einander zugeordnet, dass jedes Dichtelement 50A,50B zwischen zwei Endpositionen frei vertikal beweglich geführt ist. Bei der in Figur 1 dargestellten Position befindet sich das Dichtelement 50A in seiner Messposition, in der es über der Austrittsöffnung 12A des Probenbehälters 12 aufsitzt.

In der entgegengesetzten, oberen Endposition liegt der obere Rand des Dichtelements 50B an einer Ringschulter 27B des Übergangsabschnittes 25B an (oberer Totpunkt).

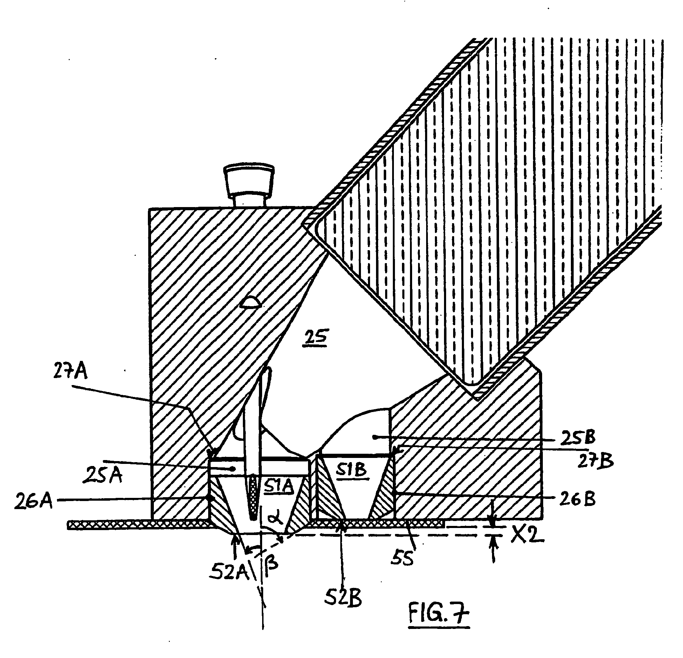

Ohne Mikroplatte (Figur 7) nimmt das Dichtelement 50A seine tiefstmögliche Position (unterer Totpunkt) an, in der es am Herausfallen aus dem Gehäuse 20 gehindert wird.

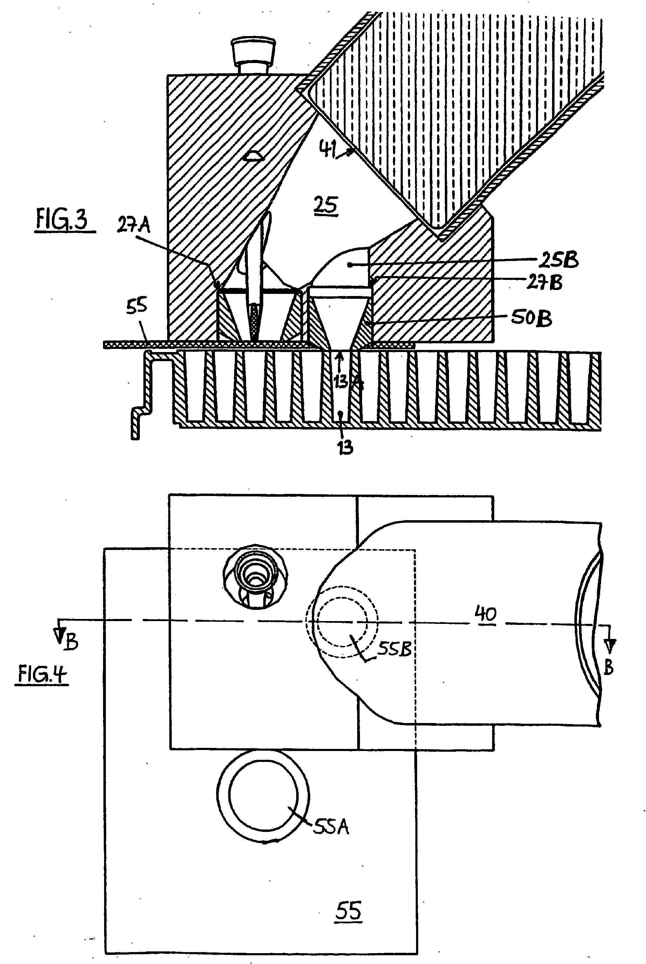

Bei Durchführung einer Messung ist die Vertikalpositionierung der Mikroplatte 10 so gewählt, dass das Dichtelement 50A oder 50B eine Position zwischen den beiden genannten Endpositionen annimmt, so dass gewährleistet ist, dass das Dichtelement 50A,50B so weit aus seiner Führung 26A,26B "herausfällt", dass sein unterer Rand 52A,52B auf dem Rand des Probenbehälters 12 (Figur 1,2) bzw. 13 (Figur 3,4) aufsitzt und diese wesentliche optische Schnittstelle zwischen Austrittsquerschnitt 12A bzw. 13A und Kanal 24 gegenüber Streulicht abdichtet.

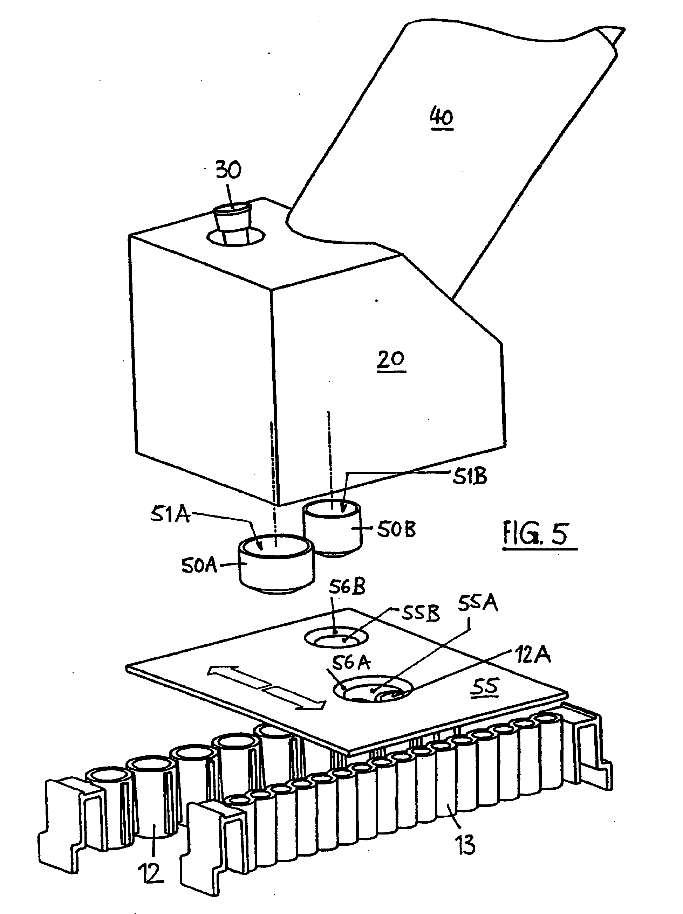

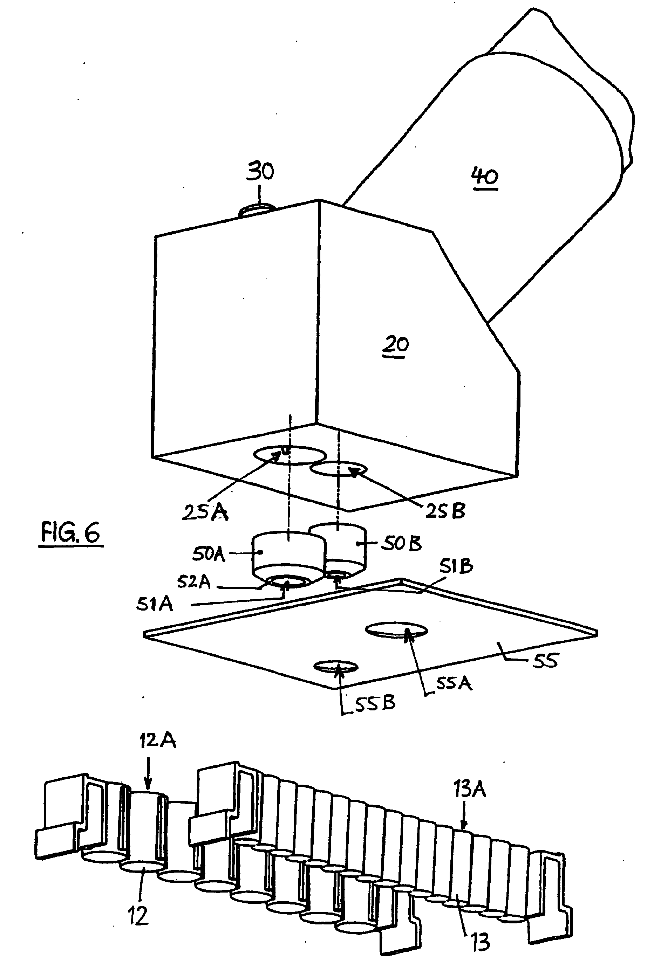

Hierbei ist jedes der beiden Dichtelemente 50A,50B mit seinem inneren, sich kegelförmig aufweitenden Durchgangskanal 51A,51B so an die verwendete Mikrotiterplatte 10 angepasst, dass der Eintrittsquerschnitt des Dichtelements möglichst weitgehend dem Austrittsquerschnitt 12A bzw. 13A des Probenbehälters 12 bzw. 13 entspricht. Dies ist schematisch auch in den Figuren 5 und 6 dargestellt:

Soll aus den Probenbehältern 12 gemessen werden, wird die Blendenplatte 55 so horizontal verschoben, dass ihre Öffnung 55A unterhalb des Dichtelements 50A zu liegen kommt; entsprechend wird bei einer beabsichtigten Messung aus den Probenbehältern 13 die Öffnung 55B unterhalb des Dichtelements 50B angeordnet.

An die Übergangsabschnitte 25A,25B schließt sich nach oben der obere gemeinsame Abschnitt 25 des Kanals 24 an, der sich kegelförmig zur Eintrittsblende 41 des Strahlungsdetektors 40 hin aufweitet, und dessen Längsachse mit der Längsachse des Strahlungsdetektors 40 fluchtet. Die Vertikalachse der Probenbehälter 12 oder 13 und des Übergangsabschnitts 25A,25B mit dem Durchgangskanal 51A,51B des Dichtelements 50A,50B einerseits und die Mittelachse des oberen Abschnitts 25 und des Strahlungsdetektors 40 andererseits bilden einen Winkel β, der beim dargestellten Ausführungsbeispiel etwa 45° beträgt. Der Winkel β ist dabei so gewählt, dass vom größten Teil der Eintrittsblende 41 des Strahlungsdetektors 40 aus der Eintrittsquerschnitt 12A,13A des jeweiligen Probenbehälters 12,13 möglichst vollständig "gesehen" wird, um einen möglichst hohen Anteil an direkter Lichtmessung zu ermöglichen.

Die Innenfläche des Kanals 24 kann zur Verbesserung der optischen Übertragungseigenschaften in an sich bekannter Weise verspiegelt ausgeführt sein.

Die Gestaltung des optischen Strahlenwegs zum Strahlungsdetektor kann aber auch bspw. wie in der DE 41 23 818 mit einem Lichtleiterbündel realisiert werden.

Die Arbeitsweise des bevorzugten Ausführungsbeispiels der erfindungsgemäßen Vorrichtung soll nun anhand von zwei Beispielen näher erläutert werden:

Als erstes Beispiel soll eine Chemilumineszenzmessung durchgeführt werden, wobei als Mikroplatte 10 diejenige mit den größeren Probenbehältern 12 benutzt werden soll. Für die Messung muss also folglich der Übergangsabschnitt 25A des Messkanals 24 verwendet werden, in den sowohl die Injektionseinrichtung 30 hineinragt als auch das Dichtelement 50A geführt ist, da dessen Endquerschnitt so bemessen ist, dass er im wesentlichen mit dem Austrittsquerschnitt 12A der Probenbehälter 12 übereinstimmt.

Die Blendenplatte 55 wird zunächst in die in Figur 1 und 2 dargestellte Position verfahren, in der das Dichtelement 50A mit seinem unteren konischen Rand auf dem konischen Rand 56A der Blendenplatte aufsitzt und somit der in Figur 7 dargestellte, untere Totpunkt des Dichtelementes 50A erreicht ist, also diejenige Position, in der die Vorrichtung zur Messung bereit ist, aber noch keine Mikroplatte 10 sich unterhalb der Blendenplatte 55 befindet. Der untere Totpunkt ist demnach durch einen Abstand X2 des unteren Randes 52A des Dichtelementes 50A von der Unterseite der Blendenplatte 55 charakterisiert.

Zur Durchführung der Messung wird mit an sich bekannten Vorrichtungen, also insbesondere schlittenähnlichen Aufnahmeplatten, die Mikroplatte 10 unter der Blendenplatte 55 vorbeigeführt, bis die Austrittsquerschnitte 12A der Probenbehälter 12 nacheinander mit dem unteren Querschnitt des Dichtelementes 50A fluchten. Hierbei ist zu beachten, dass der Abstand X1 der Oberkante der Mikroplatte 10 zur Unterseite der Blendenplatte 55 geringer ist, als der Abstand X2, d.h., das Dichtelement 50A befindet sich in einer gegenüber des unteren Totpunkts angehobenen Position, in der sein unterer Konusabschnitt nicht mehr auf dem entsprechend ausgebildeten konusförmigen inneren Rand 56A der Blendenplatte 55 aufsitzt, sondern ausschließlich sein innerer, unterer Rand 52A auf dem entsprechenden oberen Rand der Mikroplatte 10 in der unmittelbaren Umgebung des Austrittsquerschnitts 12A eines Probenbehälters 12. Durch diese Entkoppelung zwischen Blendenplatte 55 und Dichtelement 50A in der Messposition ist folglich gewährleistet, dass ein weitgehend vollflächiges Aufsitzen des Dichtelementes 50A auf dem oberen Rand des Probenbehälters 12 erfolgt, was Voraussetzung für eine optimale Abdichtung gegen Umgebungsstreulicht ist.

In dieser Position kann nun die Chemilumineszenzmessung durchgeführt werden, d.h., es wird von der Injektionseinrichtung 30 das entsprechende Reagens in den Probenbehälter 12 eingegeben, wonach die entsprechende Chemilumineszenzreaktion abläuft und die Lumineszenzstrahlung über den optischen Kanal 24 mit minimaler Schwächung in den Eintrittsquerschnitt 41 des Strahlungsdetektors 40 gelangt, in der Regel ein Fotomultiplier.

Nach Durchführung der Messung an der gewünschten Zahl der Probenbehälter 12 in der Mikroplatte 10 wird diese weggefahren und das Dichtelement 50A fällt wieder nach unten, bis der in Figur 7 dargestellte untere Totpunkt (Abstand X2) erreicht ist.

Beim zweiten Beispiel soll eine Strahlungsmessung durchgeführt werden, die keine Injektion eines Reagens erfordert und es sollen hierfür Mikroplatten 10 mit den kleineren Probenbehältern 13 verwendet werden.

Die Blendenplatte 55 wird demnach so verfahren, bis sie die in Figur 3 und 4 dargestellte Position erreicht hat, bei der das Dichtelement 50B auf dem oberen Rand eines der Probenbehälter 13 aufsitzt. Bei der dann anschließenden Reaktion gelangt das Reaktionslicht über den Übergangsabschnitt 25B in den optischen Kanal 24 und von dort zur Eintrittsblende 41 des Detektors 40.

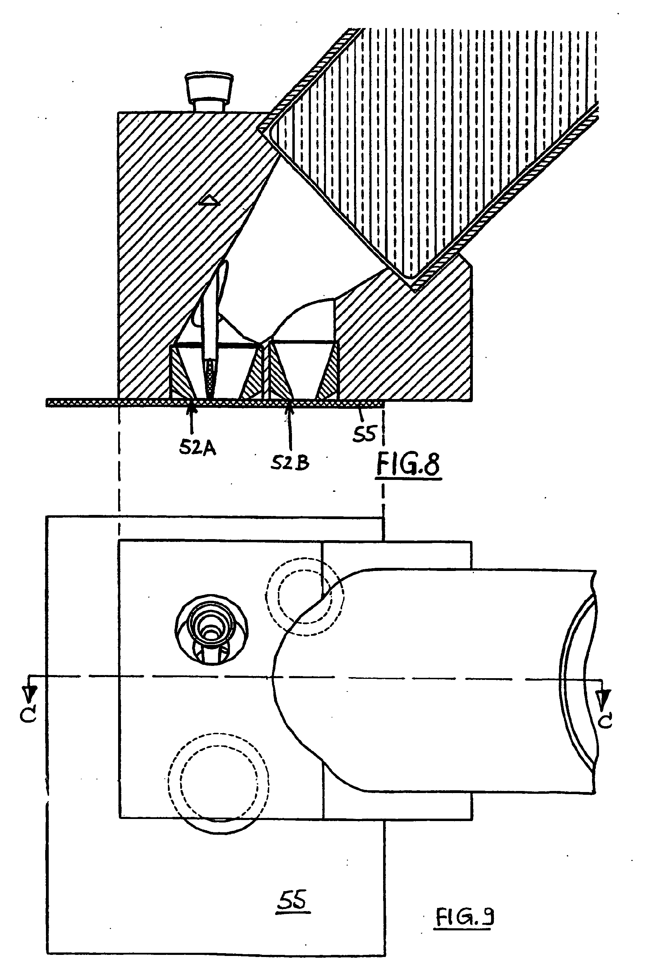

Wenn die Messungen abgeschlossen sind, kann die Blendenplatte 55 in die in Figur 8 und 9 dargestellte Position verfahren werden, bei der beide Dichtelemente 50A,50B mit ihrem unteren Rand 52A,52B auf der Oberseite der Blendenplatte 55 aufsitzen und der optische Strahlungsweg gesperrt ist. In dieser Position befinden sich die beiden Dichtelemente 50A,50B in ihrem oberen Totpunkt.

Die Blendenplatte 55 steuert durch ihre horizontale Positionierung die Vertikalverschiebung der Dichtelemente 50A,50B in deren Führungen 26A,26B, die als zylindrischer Teilabschnitt der unteren Übergangsabschnitte 25A,25B des optischen Kanals 24 ausgebildet sind.

Die Blendenplatte 55 kann folglich bei der erfindungsgemäßen Lösung funktionell als Schaltelement dienen, in dem sie entweder eine der beiden Dichtelemente 50A/50B aktiviert (Figur 1/2 oder Figur 3/4), oder aber beide Dichtelemente in eine "Ruheposition" schaltet (Figur 8/9).

Die erfindungsgemäße Vorrichtung erlaubt somit mit einem äußerst kompakten Aufbau die Durchführung verschiedener Messungen, insbesondere Chemilumineszenzmessungen, unter Gewährleistung einer optimierten Abdichtung des optischen Kanals gegenüber Streulichteinflüssen und Gewährleistung einer hohen Lichtausbeute auch bei der Verwendung von Probenbehältern mit sehr geringem Austrittsquerschnitt.

## Patentansprüche

1. Strahlungsmessgerät, insbesondere zur Messung der Lumineszenz, mit einem Detektor (40) zur Erfassung der Strahlung aus auf einer Aufnahmeplatte unter dem Detektor in einer Horizontalposition angeordneten Probenbehältern (12,13), und mit Verschiebeeinrichtungen mit mindestens einem vertikal verschiebbaren Dichtelement (50A,50B) zur sukzessiven, automatischen gegenseitigen Zuordnung jeweils eines der Probenbehälter und der Eintrittsblende des Detektors, derart, dass in der Messposition der jeweilige Probenbehälter und die Eintrittsblende (41) des Detektors (40) durch Verwendung des mindestens einen vertikal verschiebbaren Dichtelements (50A,50B) nach außen lichtdicht zueinander liegen, wobei das Dichtelement in der Messposition die Austrittsöffnung (12A, 13A) eines der Probenbehälter (12,13) überdeckt und einen Durchgangskanal (51A,51B) zum Durchtritt der Strahlung in der Messposition von der Austrittsöffnung (12A,13A) des Probenbehälters (12,13) zur Eintrittsblende (41) des Detektors (40) aufweist, **dadurch gekennzeichnet, dass** das Strahlungsmessegerät ein Gehäuse (20), eine in dem Gehäuse (20) angeordnete Führung (26A,26B) und ein unterhalb des Gehäuses (20) angeordnetes Blendenelement aufweist, **dass** das Dichtelement (50A,50B) ein Formteil mit einer Aussenkontur ist, die der Innenkontur der über den Probenbehältern (12,13) in dem Gehäuse (20) angeordneten Führung (26A,26B) derart entspricht, dass eine reibungsfreie Vertikalverschiebung des Dichtelements (50A,50B) erfolgen kann, dass das Dichtelement (50A,50B) einen in Richtung zu den Probenbehältern (12,13) zeigenden kegelstumpfförmig ausgebildeten Abschnitt aufweist, und dass die Vertikalverschiebung des Dichtelementes (50A,50B) zu den Probenbehältern (12,13) hin durch das den kegelstumpfförmigen Abschnitt des Dichtelements (50A,50B) untergreifende Blendenelement begrenzt ist, so dass das Dichtelement (50A,50B) in seiner tiefstmöglichen Position ohne Probenbehälter (12,13) am Herausfallen aus dem Gehäuse (20) gehindert ist und in der Messposition seine vertikale Position sich an die vertikale Position des zugeordneten Proben behälters (12,13) anpasst, indem es soweit aus seiner Führung (26A,26B) herausfällt, bis es mit seinem unteren Rand (52A,52B) auf dem Probenbehälter (12,13) aufsitzt.

2. Vorrichtung nach Anspruch 1, **dadurch gekennzeichnet, dass** die Außenkontur des Dichtelements (50A,50B) und die Innenkontur der Führung (26A,26B) zylindrisch ausgebildet sind.

3. Vorrichtung nach Anspruch 2, **dadurch gekennzeichnet, dass** die Innenkontur der Führung (26A,26B) eine Ringschulter (27A,27B) aufweist, die den oberen Totpunkt der Vertikalverschiebung des Dichtelementes (50A,50B) definiert.

4. Vorrichtung nach Anspruch 1 bis 3, **dadurch gekennzeichnet, dass** der kegelstumpfförmige, zu den Probenbehältern (12,13) zeigende Abschnitt des Dichtelementes (50A,50B), in dessen unterer Stirnfläche die untere Öffnung des Durchgangskanals (51A,51B) unter Bildung des unteren Randes (52A,52B) mündet, einen ersten Öffnungswinkel (α) aufweist.

5. Vorrichtung nach Anspruch 4, Anspruch 4 abhängig von Anspruch 3, **dadurch gekennzeichnet, dass** der Durchgangskanal (51A,51B) sich zur Ringschulter (27A,27B) der Führung (26A,26B) kegelstumpfförmig mit einem zweiten Öffnungswinkel (β) aufweitet.

6. Vorrichtung nach Anspruch 5, **dadurch gekennzeichnet, dass** der zweite Öffnungswinkel (β) derart bemessen ist, dass die Breite des Randes der oberen Stirnseite des Dichtelementes (50A,50B) etwa der Breite der Ringschulter (27A,27B) entspricht.

7. Vorrichtung nach Anspruch 4, **dadurch gekennzeichnet, dass** das Blendenelement als Blendenplatte (55) mit mindestens einer Öffnung (55A,55B) ausgebildet ist, die mindestens eine kegelstumpfförmige Ringschulter (56A,56B) mit einem Öffnungswinkel aufweist, der dem ersten Öffnungswinkel (α) des kegelstumpfförmigen Abschnitts des Dichtelementes (50A,50B) entspricht.

8. Vorrichtung nach Anspruch 7, **dadurch gekennzeichnet, dass** sich die Blendenplatte (55) über die Oberfläche zumindest eines Teiles der Gesamtheit der Probenbehälter (12,13) erstreckt.

9. Vorrichtung nach Anspruch 1, **dadurch gekennzeichnet, dass** mindestens zwei Dichtelemente (50A,50B) verschiedener Ausbildung vorgesehen sind, die jeweils in eine entsprechende Führung (26A,26B) einbringbar sind.

10. Vorrichtung nach Anspruch 9, **dadurch gekennzeichnet, dass** sich die Dichtelemente (50A,50B) im Querschnitt der unteren Öffnung ihres Durchtrittskanals (51A,51B) unterscheiden.

11. Vorrichtung nach Anspruch 7 bis 10, **dadurch gekennzeichnet, dass** die Blendenplatte (55) mindestens zwei Öffnungen (55A,55B) aufweist, die derart angeordnet und bemessen sind, dass durch Wahl der Horizontalposition der Blendenplatte (55) entweder jeweils einer der Dichtelemente (50A,50B) in seiner Führung (26A,26B) so weit nach unten gleitet, bis es mit seinem unteren Rand (52A,52B) auf einem Probenbehälter (12,13) in der Messposition aufsitzt und das jeweils andere auf der Blendenplatte (55) aufsitzt und somit dessen Durchgangskanal (51A,51B) verschlossen ist, oder beide Dichtelemente (50A,50B) auf der Blendenplatte (55) aufsitzen.

## Claims

1. Radiation measuring appliance, more especially for measuring luminescence, said appliance having a detector (40) for detecting the radiation, which detector is formed from sample containers (12, 13) disposed in a horizontal position on a receiving plate beneath the detector, and said appliance having displacement means with at least one vertically displaceable sealing element (50A, 50B) for the successive, automatic, reciprocal assignment respectively of one of the sample containers and the inlet screen of the detector in such a manner that, in the measuring position, the respective sample container and the inlet screen (41) of the detector (40) lie outwardly in a lightproof manner relative to each other by the use of the at least one vertically displaceable sealing element (50A, 50B), the sealing element, in the measuring position, covering the outlet opening (12A, 13A) of one of the sample containers (12, 13) and including a through-channel (51A, 51 B) for the passage of the radiation, in the measuring position, from the outlet opening (12A, 13A) of the sample container (12, 13) to the inlet screen (41) of the detector (40), **characterised in that** the radiation measuring appliance includes a housing (20), a guide (26A, 26B) disposed in the housing (20), and a screen element disposed beneath the housing (20); **in that** the sealing element (50A, 50B) is a moulded part with an outer contour which corresponds to the inner contour of the guide (26A, 26B) disposed above the sample containers (12, 13) in the housing (20) in such a manner that a friction-free vertical displacement of the sealing element (50A, 50B) can result; **in that** the sealing element (50A, 50B) includes a frustoconically configured portion pointing in the direction of the sample containers (12, 13); and **in that** the vertical displacement of the sealing element (50A, 50B) towards the sample containers (12, 13) is limited by the screen element, which engages beneath the frustoconical portion of the sealing element (50A, 50B), so that the sealing element (50A, 50B), in its lowest possible position without sample containers (12, 13), is prevented from falling out of the housing (20) and, in the measuring position, its vertical position is adapted to the vertical position of the associated sample container (12, 13), by its falling so far out of its guide (26A, 26B) that it sits upon the sample container (12, 13) with its lower edge (52A, 52B).

2. Apparatus according to claim 1, **characterised in that** the outer contour of the sealing element (50A, 50B) and the inner contour of the guide (26A, 26B) have a cylindrical configuration.

3. Apparatus according to claim 2, **characterised in that** the inner contour of the guide (26A, 26B) includes an annular shoulder (27A, 27B), which defines the upper dead centre of the vertical displacement of the sealing element (50A, 50B).

4. Apparatus according to claims 1 to 3, **characterised in that** the frustoconical portion of the sealing element (50A, 50B), pointing towards the sample containers (12, 13), includes a first opening angle (α), the lower opening of the through-channel (51A, 51B) terminating in the lower end face of said sealing element so as to form the lower edge (52A, 52B).

5. Apparatus according to claim 4, claim 4 being dependent on claim 3, **characterised in that** the through-channel (51A, 51B) widens-out towards the annular shoulder (27A, 27B) of the guide (26A, 26B) in a frustoconical manner with a second opening angle (β).

6. Apparatus according to claim 5, **characterised in that** the second opening angle (β) is dimensioned in such a manner that the width of the edge of the upper end face of the sealing element (50A, 508) corresponds substantially to the width of the annular shoulder (27A, 27B).

7. Apparatus according to claim 4, **characterised in that** the screen element is in the form of a screen plate (55) with at least one opening (55A, 55B), which includes at least one frustoconical annular shoulder (56A, 56B) with an opening angle which corresponds to the first opening angle (α) of the frustoconical portion of the sealing element (50A, 50B).

8. Apparatus according to claim 7, **characterised in that** the screen plate (55) extends over the surface of at least a part of all of the sample containers (12, 13).

9. Apparatus according to claim 1, **characterised in that** at least two sealing elements (50A, 50B) of different configurations are provided, which can each be inserted into a corresponding guide (26A, 26B).

10. Apparatus according to claim 9, **characterised in that** the sealing elements (50A, 50B) differ in the cross-section of the lower opening of their through-channel (51A, 51 B).

11. Apparatus according to claims 7 to 10, **characterised in that** the screen plate (55) includes at least two openings (55A, 55B), which are disposed and dimensioned in such a manner that, through selecting the horizontal position of the screen plate (55), either one of the respective sealing elements (50A, 50B) slides so far downwardly in its guide (26A, 26B) that it rests, in the measuring position, with its lower edge (52A, 52B) on a sample container (12, 13), and the respective other sealing element rests on the screen plate (55) and, in consequence, the through-channel (51 A, 51B) thereof is closed, or the two sealing elements (50A, 50B) rest on the screen plate (55).

## Revendications

1. Appareil de mesure de rayonnement, en particulier pour la mesure de la luminescence, comportant un détecteur (40) pour la collecte du rayonnement provenant de récipients d'échantillons (12, 13) placés en position horizontale sur un plateau récepteur sous le détecteur, et des dispositifs de déplacement comprenant au moins un élément d'étanchéité mobile verticalement (50A, 50B), servant à la mise en correspondance successive, automatique et réciproque de chacun des récipients d'échantillon et du diaphragme d'entrée du détecteur, de telle façon que dans la position de mesure, le récipient d'échantillonnage concerné et le diaphragme d'entrée (41) du détecteur (40) soient en relation d'étanchéité à la lumière l'un avec l'autre vis à vis de l'extérieur grâce à l'utilisation d'au minimum un élément d'étanchéité (50A, 50B) mobile verticalement, et où l'élément d'étanchéité en position de mesure recouvre l'ouverture d'extraction (12A, 13A) de l'un des récipients d'échantillon et présente un canal de passage (51A, 51B) pour le transit du rayonnement depuis l'ouverture d'extraction (12A, 13A) du récipient d'échantillon jusqu'au diaphragme d'entrée (41) du détecteur (40), dans la position de mesure, **caractérisé en ce que** l'appareil de mesure de rayonnement comporte un boîtier (20), un guidage (26A, 26B) agencé dans le boîtier (20) et un élément de diaphragme agencé en dessous du boîtier (20), l'élément d'étanchéité (50A, 50B) est une pièce moulée dont le contour extérieur correspond au contour intérieur du guidage (26A, 26B) agencé dans le boîtier (20) au-dessus des récipients d'échantillon (12, 13), de façon à permettre un déplacement vertical et exempt de friction de l'élément d'étanchéité (50A, 50B), **en ce que** l'élément d'étanchéité (50A, 50B) présente une partie tronconique dirigée vers les récipients d'échantillon (12, 13) et **en ce que** le déplacement vertical de l'élément d'étanchéité (50A, 50B) jusqu'aux récipients d'échantillon (12, 13) est limité par l'élément de diaphragme engagé sous la partie tronconique de l'élément d'étanchéité (50A, 50B), de sorte que dans sa position la plus basse possible en l'absence de récipient d'échantillon (12, 13), l'élément d'étanchéité (50A, 50B) est empêché de tomber du boîtier (20) et dans la position de mesure sa position verticale s'adapte à la position verticale du récipient d'échantillon (12, 13) correspondant, grâce au fait qu'il sort de son guidage (26A, 26B) jusqu'à ce qu'il repose par son bord inférieur (52A, 52B) sur le récipient d'échantillon (12, 13).

2. Appareil selon la revendication 1, **caractérisé en ce que** le contour extérieur de l'élément d'étanchéité (50A, 50B) et le contour intérieur du guidage (26A, 26B) sont cylindriques.

3. Appareil selon la revendication 2, **caractérisé en ce que** le contour intérieur du guidage (26A, 26B) comporte un épaulement annulaire (27A, 27B) qui définit le point mort supérieur du déplacement vertical de l'élément d'étanchéité (50A, 50B).

4. Appareil selon l'une des revendication 1 à 3, **caractérisé en ce que** la partie tronconique de l'élément d'étanchéité (50A, 50B) dirigée vers les récipients d'échantillon (12, 13), et dans la surface d'extrémité inférieure de laquelle débouche l'ouverture inférieure du canal de passage (51A, 51B) avec formation du bord inférieur (52A, 52B), comporte un premier angle d'ouverture (α).

5. Appareil selon la revendication 4, dépendant elle-même de la revendication 3 **caractérisé en ce que** le canal de passage (51A, 51B) s'élargit en forme de tronc de cône jusqu'à l'épaulement annulaire (27A, 27B) du guidage (26A, 26B) avec un deuxième angle d'ouverture (β).

6. Appareil selon la revendication 5, **caractérisé en ce que** le deuxième angle d'ouverture (β) est calculé de façon à ce que la largeur du bord de la face d'extrémité supérieure de l'élément d'étanchéité (50A, 50B) corresponde environ à la largeur de l'épaulement annulaire (27A, 27B).

7. Appareil selon la revendication 4, **caractérisé en ce que** l'élément de diaphragme est formé d'une plaque de diaphragme (55) comportant au minimum une ouverture (55A, 55B), laquelle comprend au minimum un épaulement annulaire tronconique (56A, 56B) avec un angle d'ouverture qui correspond au premier angle d'ouverture (α) de la partie tronconique de l'élément d'étanchéité (50A, 50B).

8. Appareil selon la revendication 7, **caractérisé en ce que** la plaque de diaphragme (55) s'étend sur la surface d'au moins une partie de l'ensemble des récipients d'échantillon.

9. Appareil selon la revendication 1, **caractérisé en ce qu'**il est prévu au moins deux éléments d'étanchéité (50A, 50B) différemment réalisés, pouvant chacun rentrer dans un guidage correspondant (26A, 26B).

10. Appareil selon la revendication 9, **caractérisé en ce que** les éléments d'étanchéité (50A, 50B) diffèrent par la section transversale de l'ouverture inférieure de leur canal de passage (51A, 51B).

11. Appareil selon l'une des revendications 7 à 10, **caractérisé en ce que** la plaque de diaphragme (55) comprend au minimum deux ouvertures (55A, 55B) qui sont agencées et calculées de telle façon que grâce au choix de la position horizontale de la plaque de diaphragme (55), soit à chaque fois l'un des éléments d'étanchéité (50A, 50B) glisse suffisamment bas dans son guidage (26A, 26B) pour reposer par son bord inférieur (52A, 52B) sur un récipient d'étanchéité (12, 13) dans la position de mesure, et l'autre élément repose sur la plaque de diaphragme (55), et son canal de passage (51A, 51B) est ainsi fermé, soit les deux éléments d'étanchéité (50A, 50B) reposent sur la plaque de diaphragme (55).
